# EUROPEAN PATENT SPECIFICATION

(11) **EP 2 738 025 B1**
(45) Date of publication and mention of the grant of the patent: **14.09.2016**
(21) Application number: 12817443.0
(22) Date of filing: 21.06.2012
(51) Int. Cl.: B60G 17/005, B62K 25/08, F16D 63/00, F16F 9/56

(54) **SUSPENSION DEVICE**
AUFHÄNGUNGSVORRICHTUNG
SUSPENSION

(30) Priority: 25.07.2011 JP 2011161520
(43) Date of publication of application: 04.06.2014
(73) Proprietor: KYB Corporation, Tokyo 105-6111 (JP); Yamaha Hatsudoki Kabushiki Kaisha, Iwata-shi, Shizuoka 438-8501 (JP)
(72) Inventor: YOSHIMOTO, Tsutomu, Tokyo 105-6111 (JP); TAKANO, Kazuhisa, Shizuoka 438-8501 (JP)
(74) Representative: Grünecker Patent- und Rechtsanwälte PartG mbB
(86) International application number: PCT/JP2012/065830
(87) International publication number: WO 2013/015050

(56) References cited:
- EP-A1- 0 093 709
- EP-A1- 1 571 016
- JP-A- S58 501 285
- JP-A- 2005 247 303
- JP-U- H 066 774
- JP-U- H01 152 104
- JP-U- H01 152 104

## Description

### TECHNICAL FIELD

The present invention relates to an improvement of a suspension device, which is to be interposed between a vehicle body and a wheel, and includes a stroke lock section.

### BACKGROUND ART

JP 2005-247303 A discloses a suspension device, which is to be interposed between a vehicle body and a wheel, and includes a stroke lock section. The suspension device is used as a front wheel suspension device for suspending a front wheel of a three-wheeled vehicle.

The suspension device includes a shock absorber body including an inner tube and an outer tube into which the inner tube is slidably inserted, and a stroke lock section for stopping expansion and contraction of the shock absorber body at the time of parking or a temporary stop.

The stroke lock section includes: a caliper element fixed to the outer tube; and a pin element fixed to the inner tube so as to be held in slide-contact with the caliper element.

The caliper element is driven by a hydraulic system, and includes a pair of brake shoes for sandwiching the pin element at the time of stroke locking.

### SUMMARY OF INVENTION

However, in the above-mentioned conventional suspension device, an oil pressure of the hydraulic system is converted by a converting mechanism, and thus a force of pressing the brake shoes onto the pin element is generated. Accordingly, the converting mechanism is needed, and hence its structure is complicated and cost is increased.

It is an object of the present invention to provide a suspension device capable of achieving a simplified structure and cost reduction.

According to the present invention, as disclosed in claim 1, a suspension device comprises one member having a rod shape; another member into which the one member is slidably inserted; and a stroke lock section adapted to stop sliding of the one member, wherein the stroke lock section includes a stroke lock chamber having a tubular shape and formed between an outer periphery of the one member and an inner periphery of the another member, a pair of annular elastic seals arranged respectively on both sides of the stroke lock chamber so as to be held in slide-contact with the outer periphery of the one member and sealing both openings of the stroke lock chamber, and a pump adapted to change an internal pressure of the stroke lock chamber.

Embodiments of the present invention and advantages thereof are described in detail below with reference to the accompanying drawings.

### BRIEF DESCRIPTION OF DRAWINGS

FIG. 1 is a partially cutout front view illustrating a use state of a suspension device according to an embodiment of the present invention; and
FIG. 2 is an enlarged longitudinal cross-sectional view illustrating a main part (periphery of a guide member) of FIG. 1.

### DESCRIPTION OF EMBODIMENTS

In the following, a suspension device according to an embodiment of the present invention is described with reference to the drawings. The same reference symbols of the respective drawings denote the same components.

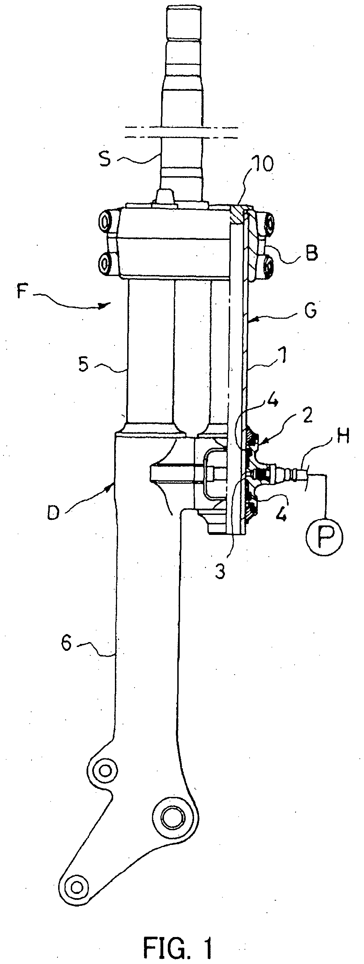

As illustrated in FIG. 1, a suspension device F according to this embodiment includes a guide rod 1 which serves as one member having a rod shape, a guide member 2 which serves as another member into which the guide rod 1 is slidably inserted, and a stroke lock section for stopping sliding of the guide rod 1.

The stroke lock section includes a tubular stroke lock chamber 3 formed between an outer periphery of the guide rod 1 and an inner periphery of the guide member 2, a pair of annular elastic seals 4, 4 arranged respectively on both sides of the stroke lock chamber 3 so as to be held in slide-contact with the outer periphery of the guide rod 1, for sealing both openings of the stroke lock chamber 3, and a pump P for changing an internal pressure of the stroke lock chamber 3.

In a motor tricycle including two front wheels as steering wheels and one rear wheel as a drive wheel, the suspension device F is applied to each of a pair of front wheel suspension devices for suspending front wheels.

It should be noted that FIG. 1 illustrates only one of the suspension devices F. However, also another one of the suspension devices, which is paired with the one of the suspension devices F, has the same configuration as that of the one of the suspension devices F.

The suspension device F includes a shock absorber body D including an inner tube 5 coupled to a vehicle body side and an outer tube 6 coupled to a wheel side and allowing the inner tube 5 to be slidably inserted thereinto. In the shock absorber body D, a suspension spring (not shown) and a damping force generating portion (not shown) are accommodated.

The suspension spring absorbs a shock received by a vehicle, and the damping force generating portion controls a telescopic motion of the suspension device F that is caused along with absorption of the shock. A well-known configuration may be adopted as a configuration of the damping force generating portion, and hence description thereof is omitted herein.

The suspension device F includes a relative rotation preventing section G for preventing relative rotation between the inner tube 5 and the outer tube 6. The relative rotation preventing section G is configured by the guide rod 1 as the one member and the guide member 2 as the another member.

The guide rod 1 is fixed to the inner tube 5 through the intermediation of a bracket B so as to be parallel to the inner tube 5. The guide member 2 is fixed with a bolt to a side surface of an upper end portion of the outer tube 6 illustrated in FIG. 1.

A steering shaft S is linked to the bracket B. The steering shaft S extends upwards from the bracket B, and is coupled to a handlebar (not shown) through the intermediation of a link mechanism (not shown).

It should be noted that the link mechanism may be configured to enable the bracket B to turn about an axis of the steering shaft S through operation of the handlebar. For example, a well-known configuration described in JP 2008-168893 A may be adopted.

The guide rod 1 is formed into a tubular shape, and a cap member 10 is fitted to an upper opening portion of the guide rod 1 illustrated in FIG. 1. With this configuration, even when the bracket B holds the upper end portion of the guide rod 1 illustrated in FIG. 1, it is possible to prevent deformation of the guide rod 1.

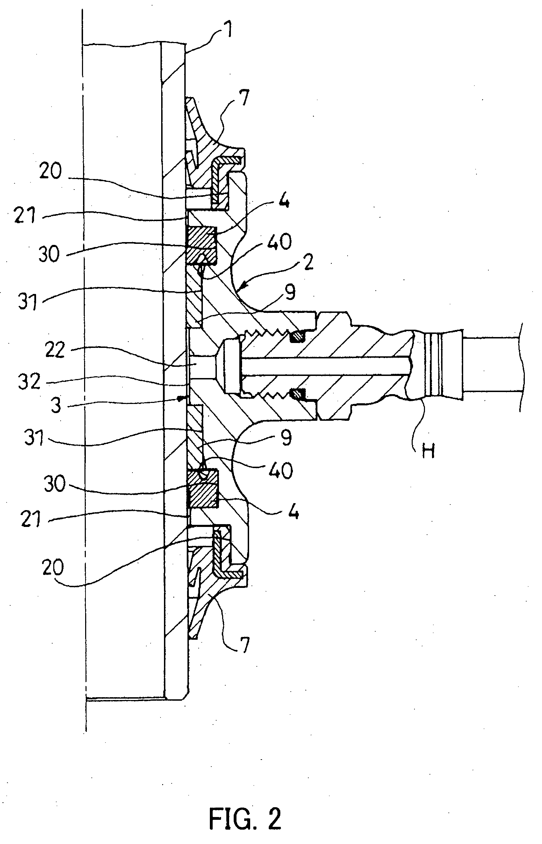

The guide member 2 includes a through-hole through which the guide rod 1 passes in an up-and-down direction of FIG. 1. As illustrated in FIG. 2, in the inner periphery of the guide member 2, the following are formed: a pair of dust seal retaining portions 20, 20 formed respectively at upper and lower opening end portions of the guide member 2 illustrated in FIG. 2, a pair of seat portions 21, 21 formed on a center side of the guide member 2 with respect to the dust seal retaining portions 20, 20, a pair of oil seal retaining portions 30, 30 formed on the center side of the guide member 2 with respect to the seat portions 21, 21, a pair of bearing member retaining portions 31, 31 formed on the center side of the guide member 2 with respect to the oil seal retaining portions 30, 30, and a center portion 32 formed between the bearing member retaining portions 31, 31 and situated at a center of the guide member 2.

A dust seal 7 is fitted in each of the dust seal retaining portions 20, 20. The dust seal 7 is held in slide-contact with the outer periphery of the guide rod 1 to scrape off foreign matters adhering on the outer periphery of the guide rod 1.

Each of the seat portions 21, 21 is formed to have a diameter that is smaller than diameters of the dust seal retaining portions 20, 20 adjacent to the seat portions 21, 21 and diameters of the oil seal retaining portions 30, 30 adjacent to the seat portions 21, 21. Each of the seat portions 21, 21 supports a back surface of each of the elastic seals 4, 4 that are fitted to the oil seal retaining portions 30, 30, respectively.

Each of the elastic seals 4, 4 is an oil seal that is formed into an annular shape and formed to have a groove 40 along a peripheral direction to form a U-shaped cross-section. The elastic seals 4, 4 are arranged so that the grooves 40, 40 face each other.

Each of the bearing member retaining portions 31, 31 is formed to have a diameter smaller than the diameters of the oil seal retaining portions 30, 30. Bearing members 9, 9 are fitted to the bearing member retaining portions 31, 31, respectively.

The center portion 32 is formed to have a diameter smaller than the diameters of the bearing member retaining portions 31, 31. In the center portion 32, a communication path 22 passing through the guide member 2 in a radial direction is formed. A hose H for communicating between the communication path 22 and the pump P as a pressure source is connected to the communication path 22.

The stroke lock chamber 3 is defined between the outer periphery of the guide rod 1 and both the oil seal retaining portions 30, 30, both the bearing member retaining portions 31, 31, and the center portion 32. Openings formed on both sides (upper and lower sides of FIG. 1 or 2) of the stroke lock chamber 3 are sealed by the elastic seals 4, 4, respectively.

In addition, a lubricating fluid is contained in the stroke lock chamber 3. The pump P supplies/discharges the lubricating fluid into/from the stroke lock chamber 3, to thereby change the internal pressure of the stroke lock chamber 3.

Next, actions of the suspension device according to this embodiment are described.

When the suspension device expands and contracts during running of the vehicle, the inner tube 5 extends/retracts from/into the outer tube 6 so that a predetermined damping force is generated, and the guide rod 1 slides through the guide member 2 in the up-and-down direction of FIG. 1 or 2.

Further, the guide rod 1, which is fixed to the inner tube 5 so as to be parallel to the inner tube 5, passes through the guide member 2 fixed to the outer tube 6. Accordingly, even when the steering shaft S is rotated to turn the bracket B, the inner tube 5 and the outer tube 6 make no relative rotation.

Therefore, the steering shaft S is rotated through the operation of the handlebar to turn the bracket B about the axis of the steering shaft S, and a direction of the front wheel is changed to enable to steer a motor tricycle. Thus, it is possible to suspend the front wheel in a cantilever state.

In addition, when stroke locking is performed at the time of parking or temporary stop of the vehicle, the pump P serving as the pressure source supplies the lubricating fluid into the stroke lock chamber 3 to pressurize the stroke lock chamber 3, and thus the elastic seals 4, 4 are compressed in an axial direction and deformed due to compression. Accordingly, the guide rod 1 is fastened and sliding of the guide rod 1 is stopped, with the result that expansion and contraction of the suspension device F is stopped.

In a case where stroke locking is released to restart running, when the pump P discharges the lubricating fluid from the stroke lock chamber 3 to cancel pressurization of the stroke lock chamber 3, the elastic seals 4, 4 are returned to original shapes. As a result, the guide rod 1 can slide, and the suspension device F can expand and contract.

In other words, according to this embodiment, the stroke lock section includes the tubular stroke lock chamber 3 formed in the inner periphery of the guide member 2, the pair of annular elastic seals 4, 4 arranged respectively on both the sides (upper and lower sides of FIG. 1 or 2) of the stroke lock chamber 3 so as to be held in slide-contact with the outer periphery of the guide rod 1, for sealing both the openings of the stroke lock chamber 3, and the pump P for changing the internal pressure of the stroke lock chamber 3.

With this configuration, with direct use of a pressure of the pump P as the pressure source, the stroke locking can be performed. Accordingly, it is possible to simplify its structure as compared to the conventional structure, and to reduce cost.

Further, the bearing members 9, 9 are arranged in the stroke lock chamber 3 containing the lubricating fluid therein, and the pump P supplies/discharges the lubricating fluid into/from the stroke lock chamber 3 to thereby change the internal pressure of the stroke lock chamber 3. Accordingly, it is possible to perform stroke locking with use of the lubricating fluid while lubricating sliding surfaces of the bearing members 9, 9 with the lubricating fluid, and it is possible to further simplify the configuration of the suspension device F including the stroke lock section.

Still further, the elastic seals 4, 4 are formed to have the grooves 40, 40 along the peripheral direction to form a U-shaped cross-sections, and the elastic seals 4, 4 are arranged so that the grooves 40, 40 face each other. Accordingly, the grooves 40, 40 are easily enlarged through reception of the pressure of the stroke lock chamber 3, and thus the guide rod 1 is easily fastened.

In addition, the stroke lock section is provided in the relative rotation preventing section G for preventing relative rotation between the outer tube 6 and the inner tube 5, and hence the stroke lock section and the relative rotation preventing section G can be integrated with each other. Without complicating the configuration of the suspension device F, the stroke lock section and the relative rotation preventing section G can be provided.

The embodiments of the present invention described above are merely illustration of some application examples of the present invention and not of the nature to limit the technical scope of the present invention to the specific constructions of the above embodiments.

For example, the above-mentioned embodiment exemplifies a case where the suspension device F suspends each front wheel of a motor tricycle in a cantilever state including two front wheels and one rear wheel. However, the suspension device F may be applied to a wheel of a four-wheeled vehicle, and the suspension device F may be arranged on each side of a wheel.

Further, according to the above-mentioned embodiment, the stroke lock section is provided in the relative rotation preventing section G, but the stroke lock section may be provided in the shock absorber body D.

Still further, according to the above-mentioned embodiment, the lubricating fluid is supplied/discharged into/from the stroke lock chamber 3, and thus the internal pressure of the stroke lock chamber 3 is changed. However, the internal pressure of the stroke lock chamber 3 may be adjusted by a gas or a liquid other than the lubricating fluid.

It should be noted that, in a case where a gas is supplied/discharged into/from the stroke lock chamber 3 and thus the internal pressure of the stroke lock chamber 3 is changed, the elastic seals 4, 4 may be used as air seals to hermetically seal the stroke lock chamber 3.

In addition, according to the above-mentioned embodiment, the elastic seals 4, 4 are formed to have U-shaped cross-sections, but the same effects can be obtained even if the elastic seals 4, 4 are formed to have V-shaped cross-sections. Accordingly, shapes of the elastic seals 4, 4 can be selected as appropriate. Further, the elastic seals 4, 4 may be formed to have the same shape, or may be formed to have different shapes.

## Claims

1. A suspension device (F), comprising:
one member (1) having a rod shape;
another member (2) into which the one member (1) is slidably inserted; and
a stroke lock section adapted to stop sliding of the one member (1), wherein
the stroke lock section includes:
a stroke lock chamber (3) having a tubular shape and formed between an outer periphery of the one member (1) and an inner periphery of the another member (2);
and
a pump (P) adapted to change an internal pressure of the stroke lock chamber (3),
**characterized in that**
a pair of annular elastic seals (4,4) are arranged respectively on both sides of the stroke lock chamber (3) so as to be held in slide-contact with the outer periphery of the one member (1) and sealing both openings of the stroke lock chamber (3); wherein
the stroke lock section is adapted to compress and deform the elastic seals (4,4) in an axial direction so as to stop sliding of the one member (1) through the another member (2) when the stroke lock chamber (3) is pressurized by the pump (P), and is adapted to return the elastic seals (4,4) to original shapes so as to enable the one member (1) to slide through the another member (2) when the pressurization of the stroke lock chamber (3) is canceled by the pump (P).

2. The suspension device (F) according to claim 1, further comprising a bearing member (9) arranged in the stroke lock chamber (3) and axially supporting the one member (1), wherein
the stroke lock chamber (3) contains a lubricating fluid therein, and the pump (P) supplies/discharges the lubricating fluid into/from the stroke lock chamber (3) to thereby change the internal pressure of the stroke lock chamber (3).

3. The suspension device (F) according to claim 1, wherein
at least one of the pair of elastic seals (4,4) has a groove along a peripheral direction on a side facing the stroke lock chamber (3) so as to have a U-shaped cross-section.

4. The suspension device (F) according to claim 1, further comprising a shock absorber including:
a shock absorber body (D) including an inner tube (5) and an outer tube (6) into which the inner tube (5) is slidably inserted ; and
a relative rotation stopping section (G) adapted to prevent relative rotation between the inner tube (5) and the outer tube (6), wherein
the relative rotation stopping section (G) includes:
a guide rod (1) fixed to the inner tube (5) so as to be parallel to the inner tube (5), and
a guide member (2) fixed to the outer tube and axially supporting the guide rod (1) so as to enable the guide rod to slide through the guide member (2), and
the one member (1) is the guide rod (1), and the another member (2) is the guide member (2).

## Patentansprüche

1. Aufhängungsvorrichtung (F), die umfasst:
ein Element (1), das eine Stangenform hat;
ein anderes Element (2), in das das eine Element (1) verschiebbar eingeführt ist; und
einen Hub-Arretierabschnitt, der so eingerichtet ist, dass er Verschieben des einen Elementes (1) zum Halten bringt, wobei der Hub-Arretierabschnitt enthält:
eine Hub-Arretierkammer (3), die eine Röhrenform hat und zwischen einem Außenumfang des einen Elementes (1) und einem Innenumfang des anderen Elementes (2) ausgebildet ist; sowie
eine Pumpe (P), die so eingerichtet ist, dass sie einen Innendruck der Hub-Arretierkammer (3) ändert,
**dadurch gekennzeichnet, dass**
paarige ringförmige elastische Dichtungen (4, 4) jeweils an beiden Seiten der Hub-Arretierkammer (3) so angeordnet sind, dass sie in Gleitkontakt mit dem Außenumfang des einen Elementes (1) gehalten werden und beide Öffnungen der Hub-Arretierkammer (3) abdichten, wobei der Hub-Arretierabschnitt so eingerichtet ist, dass er die elastischen Dichtungen (4, 4) in einer axialen Richtung zusammendrückt und verformt, um Verschieben des einen Elementes (1) durch das andere Element (2) zu unterbrechen, wenn die die Pumpe (P) Druck auf die Hub-Arretierkammer (3) ausgeübt, und er so eingerichtet ist, dass er die elastischen Dichtungen (4, 4) in ursprüngliche Formen zurückverformt, um so zu ermöglichen, dass das eine Element (1) durch das andere Element (2) verschoben wird, wenn die Druckausübung auf die Hub-Arretierkammer (3) durch die Pumpe (P) aufgehoben wird.

2. Aufhängungsvorrichtung (F) nach Anspruch 1, die des Weiteren ein Lagerungselement (9) umfasst, das in der Hub-Arretierkammer (3) angeordnet ist und das eine Element (1) axial lagert, wobei
in der Hub-Arretierkammer (3) ein Schmierfluid enthalten ist und die Pumpe (P) das Schmierfluid in die/aus der Hub-Arretierkammer (3) einleitet/ableitet, um so den Innendruck der Hub-Arretierkammer (3) zu ändern.

3. Aufhängungsvorrichtung (F) nach Anspruch 1, wobei
wenigstens eine der paarigen elastischen Dichtungen (4, 4) eine Nut in einer Umfangsrichtung an einer der Hub-Arretierkammer (3) zugewandten Seite hat und damit einen U-förmigen Querschnitt hat.

4. Aufhängungsvorrichtung (F) nach Anspruch 1, die des Weiteren einen Stoßdämpfer umfasst, der enthält:
einen Stoßdämpfer-Körper (D), der ein Innenrohr (5) und ein Außenrohr (6) enthält, das in das Innenrohr (5) verschiebbar eingeführt ist; sowie
einen Abschnitt (G) zum Unterbrechen relativer Drehung, der so eingerichtet ist, dass er relative Drehung des Innenrohrs (5) und des Außenrohrs (6) zueinander verhindert, wobei der Abschnitt (G) zum Unterbrechen relativer Drehung einschließt:
eine Führungsstange (1), die so an dem Innenrohr (5) befestigt ist, dass sie parallel zu dem Innenrohr (5) ist, und
ein Führungselement (2), das an dem Außenrohr befestigt ist und die Führungsstange (1) axial so trägt, dass die Führungsstange durch das Führungselement (2) gleiten kann, und
das eine Element (1) die Führungsstange (1) ist und das andere Element (2) das Führungselement (2) ist.

## Revendications

1. Dispositif de suspension (F) comprenant :
un élément (1) ayant la forme d'une tige ;
un autre élément (2) dans lequel le premier élément (1) est inséré de manière coulissante ; et
une section de blocage de course adaptée à arrêter le coulissement du premier élément (1), dans lequel
la section de blocage de course comporte : une chambre de blocage de course (3) ayant une forme tubulaire et formée entre la périphérie externe du premier élément (1) et la périphérie interne de l'autre élément (2) ; et
une pompe (P) adaptée à modifier la pression interne de la chambre de blocage de course (3),
**caractérisé en ce que**
les joints d'une paire de joints élastiques (4, 4) sont respectivement agencés sur les deux côtés de la chambre de blocage de course (3) de façon à être maintenue en contact coulissant avec la périphérie externe du premier élément (1) et scellant les deux ouvertures de la chambre de blocage de course (3) ;
dans lequel
la section de blocage de course est adaptée à comprimer et à déformer les joints élastiques (4, 4) dans la direction axiale de façon à arrêter le coulissement du premier élément (1) à travers l'autre élément (2) lorsque la chambre de blocage de course (3) est mise sous pression par la pompe (P) et adaptée à ramener les joints élastiques (4, 4) à leur forme d'origine de façon à permettre au premier élément (1) de coulisser à travers l'autre élément (2) lorsque la mise sous pression de la chambre de blocage de course (3) est annulée par la pompe (P).

2. Dispositif de suspension (F) selon la revendication 1, comprenant en outre un élément d'appui (9) agencé dans la chambre de blocage de course (3) et supportant axialement le premier élément (1), dans lequel
la chambre de blocage de course (3) contient dans celle-ci un fluide de lubrification et la pompe (P) fournit/évacue le fluide de lubrification dans/depuis la chambre de blocage de course (3) pour modifier ainsi la pression interne de la chambre de blocage de course (3).

3. Dispositif de suspension (F) selon la revendication 1, dans lequel
au moins un joint de la paire de joints élastiques (4, 4) comporte une rainure dans la direction périphérique sur le côté tourné vers la chambre de blocage de course (3) de façon à avoir une section en forme de U.

4. Dispositif de suspension (F) selon la revendication 1, comprenant en outre un amortisseur incluant :
un corps d'amortisseur (D) incluant un tube interne (5) et un tube externe (6) dans lequel le tube interne (5) est inséré de manière coulissante ; et
une section d'arrêt de rotation relative (G) adaptée à empêcher une rotation relative entre le tube interne (5) et le tube externe (6), dans lequel
la section d'arrêt de rotation relative (G) comporte :
une tige de guidage (1) fixée au tube interne (5) de façon à être parallèle au tube interne (5), et
un élément de guidage (2) fixé au tube externe et supportant axialement la tige de guidage (1) de façon à permettre à la tige de guidage de coulisser à travers l'élément de guidage (2), et
le premier élément (1) est constitué de la tige de guidage (1) et l'autre élément (2) est constitué de l'élément de guidage (2).
